# EUROPEAN PATENT SPECIFICATION

(11) **EP 2 189 887 B1**
(45) Date of publication and mention of the grant of the patent: **02.05.2018**
(21) Application number: 09156104.3
(22) Date of filing: 25.03.2009
(51) Int. Cl.: G06F 3/0486, H04M 1/725, G06F 3/041, G06F 3/0488

(54) **TERMINAL AND METHOD FOR ASSIGNING SHORTCUTS FOR INTERNET ADRESSES**
ENDGERÄT UND VERFAHREN ZUM FESTLEGEN VON TASTATURKÜRZEL FÜR WEB-ADRESSEN
TERMINAL ET PROCÉDÉ D'ÉTABLISSEMENT DE RACCOURCIES POUR ADRESSES INTERNET

(30) Priority: 06.11.2008 KR 20080110082
(43) Date of publication of application: 26.05.2010
(73) Proprietor: LG Electronics Inc., Seoul 150-721 (KR)
(72) Inventor: Chang, Min Kyoung, 153-801, Seoul (KR); Son, Joo Hee, 153-801, Seoul (KR); Song, Young Hoon, 153-801, Seoul (KR); Son, Seung Hwan, 153-801, Seoul (KR); Suh, Hyo Jin, 153-801, Seoul (KR)
(74) Representative: Cabinet Plasseraud

(56) References cited:
- US-A1- 2002 156 870
- US-A1- 2008 040 681

## Description

The present disclosure relates to terminal which may assign a short-cut address conveniently while communicating with the Internet.

Generally, terminals can be classified into mobile/portable terminals and stationary terminals. The mobile terminals can be classified into handheld terminals and vehicle mount terminals again according to possibility of user's direct portability.

As functions of the terminal are diversified, the terminal is implemented as a multimedia player provided with composite functions such as photographing of photos or moving pictures, playback of music or moving picture files, game play, broadcast reception and the like for example.

To support an increase of the terminal functions, it is possible to consider improving the structural part and/or software part of the terminal.

A mobile terminal may include a touch screen in the display unit as a method for providing convenient user interface (UI) to user.

A user executing wireless Internet access by means of the mobile terminal may want to use a short-cut function in order to quickly move to a desired web page due to Internet fare or fast search.
US 2002/156870 A1 relates to a method and apparatus for dynamically directing an application such as a Web browser to a pre-defined multimedia resource.
US 2008/040681 A1 relates to a system and method for automatically updating a widget on desktop.

Accordingly, an object of the present disclosure is to provide a terminal which may assign a web page address to a short-cut code conveniently during Internet access.

Another object of the present disclosure is to provide a terminal which may access the web page address by the short-cut code which is assigned to the process.

Additional advantages, objects, and features of the disclosure will be set forth in part in the description which follows and in part will become apparent to those having ordinary skill in the art upon examination of the following or may be learned from practice of the disclosure. The objectives and other advantages of the disclosure may be realized and attained by the structure particularly pointed out in the written description and claims hereof as well as the appended drawings.

To achieve these objects and other advantages and in accordance with the purpose of the disclosure, as embodied and broadly described herein, a mobile terminal according to the present disclosure is arranged as set out in claim 1.

In another aspect of the present disclosure, a method for using the Internet as set out in claim 6 is provided.

It is to be understood that both the foregoing general description and the following detailed description of the present disclosure are exemplary and explanatory and are intended to provide further explanation of the disclosure as claimed.

The accompanying drawings, which are included to provide a further understanding of the disclosure and are incorporated in and constitute a part of this application, illustrate embodiment(s) of the disclosure and together with the description serve to explain the principle of the disclosure. In the drawings:
- FIG. 1 is a block diagram of a mobile terminal according to an example related to the present disclosure;
- FIG. 2A is a front perspective diagrams of a mobile terminal according to an example related to the present disclosure;
- FIG. 2B is a rear perspective diagram of a mobile terminal according to one example related to the present disclosure;
- FIG. 3A and FIG. 3B are front diagrams of a mobile terminal according to 2. examples related to the present disclosure for explaining operational states of the mobile terminal;
- FIG. 4 is a diagram to explain the concept of proximity depth of a proximity sensor;
- FIG. 5 is a diagram to explain the concept of a method of controlling a touch action on a pair of displays overlapped with each other;
- FIG. 6A and FIG. 6B are diagrams to explain the concepts of a proximity touch recognizing area for detecting a proximity signal and a haptic area for generating a tactile effect, respectively;
- FIG. 7A is a diagram of an image on the screen of the mobile terminal for displaying a web page according to an embodiment of the present disclosure.
- FIG. 7B are diagrams of an image on the screen of the mobile terminal for displaying steps of assigning a short-cut code to the web-page related to an embodiment of the present disclosure from image of FIG. 7A.
- FIG. 8A are diagrams of an image on the screen of the mobile terminal for displaying steps of an embodiment accessing the web-page using the short-cut code assigned to the step of FIG. 7B.
- FIG. 8B is a diagram of an image on the screen of the mobile terminal for showing to return the address input state of prior art in case of a continuous key input during the steps of FIG. 8A.
- FIG. 9 are diagrams of an image on the screen of mobile terminal for showing the step of accessing the web page using the short cut code which is assigned to step shown in FIG. 7B.

Reference will now be made in detail to the preferred embodiments of the present disclosure, examples of which are illustrated in the accompanying drawings. Wherever possible, the same reference numbers will be used throughout the drawings to refer to the same or like parts. The suffixes 'module' and 'unit' for the elements used in the following description are given or used in common by considering facilitation in writing this disclosure only but fail to have meanings or roles discriminated from each other.

First of all, mobile terminals described in this disclosure can include a mobile phone, a smart phone, a laptop computer, a digital broadcast terminal, a PDA (personal digital assistants), a PMP (portable multimedia player), a navigation system and the like.

Except where applicable to mobile terminals only, it is apparent to those skilled in the art that the configurations according to an embodiment described in this disclosure are applicable to stationary terminals such as a digital TV, a desktop computer and the like.

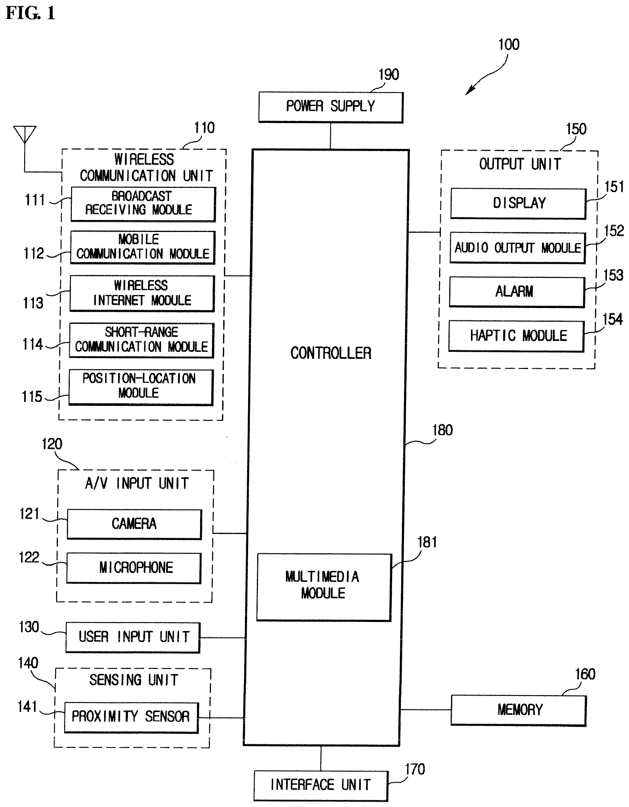

FIG. 1 is a block diagram of a mobile terminal according to one example related to the present disclosure.

Referring to FIG. 1, a mobile terminal 100 according to an example related to the present disclosure includes a wireless communication unit 110, an A/V (audio/video) input unit 120, a user input unit 130, a sensing unit 140, an output unit 150, a memory 160, an interface unit 170, a controller 180, a power supply unit 190 and the like. FIG. 1 shows the mobile terminal 100 having various components, but it is understood that implementing all of the illustrated components is not a requirement. Greater or fewer components may alternatively be implemented.

In the following description, the above elements of the mobile terminal 100 are explained in sequence.

First of all, the wireless communication unit 110 typically includes one or more components which permit wireless communication between the mobile terminal 100 and a wireless communication system or network within which the mobile terminal 100 is located. For instance, the wireless communication unit 110 can include a broadcast receiving module 111, a mobile communication module 112, a wireless Internet module 113, a short-range communication module 114, a position-location module 115 and the like.

The broadcast receiving module 111 receives a broadcast signal and/or broadcast associated information from an external broadcast managing server via a broadcast channel.

The broadcast channel may include a satellite channel and a terrestrial channel.

The broadcast managing server generally refers to a server which generates and transmits a broadcast signal and/or broadcast associated information or a server which is provided with a previously generated broadcast signal and/or broadcast associated information and then transmits the provided signal or information to a terminal. The broadcast signal may be implemented as a TV broadcast signal, a radio broadcast signal, and a data broadcast signal, among others. If desired, the broadcast signal may further include a broadcast signal combined with a TV or radio broadcast signal.

The broadcast associated information includes information associated with a broadcast channel, a broadcast program, a broadcast service provider, etc. And, the broadcast associated information can be provided via a mobile communication network. In this case, the broadcast associated information can be received by the mobile communication module 112.

The broadcast associated information can be implemented in various forms. For instance, broadcast associated information may include an electronic program guide (EPG) of digital multimedia broadcasting (DMB) and electronic service guide (ESG) of digital video broadcast-handheld (DVB-H).

The broadcast receiving module 111 may be configured to receive broadcast signals transmitted from various types of broadcast systems. By non-limiting example, such broadcasting systems include digital multimedia broadcasting-terrestrial (DMB-T), digital multimedia broadcasting-satellite (DMB-S), digital video broadcast-handheld (DVB-H), the data broadcasting system known as media forward link only (MediaFLO®) and integrated services digital broadcast-terrestrial (ISDB-T). Optionally, the broadcast receiving module 111 can be configured suitable for other broadcasting systems as well as the above-explained digital broadcasting systems.

The broadcast signal and/or broadcast associated information received by the broadcast receiving module 111 may be stored in a suitable device, such as a memory 160.

The mobile communication module 112 transmits/receives wireless signals to/from one or more network entities (e.g., base station, external terminal, server, etc.). Such wireless signals may represent audio, video, and data according to text/multimedia message transceiving, among others.

The wireless Internet module 113 supports Internet access for the mobile terminal 100. This module may be internally or externally coupled to the mobile terminal 100. In this case, the wireless Internet technology can include WLAN(Wireless LAN) (Wi-Fi), Wibro (Wireless broadband), Wimax (World Interoperability for Microwave Access), HSDPA (High Speed Downlink Packet Access), etc.

The short-range communication module 114 facilitates relatively short-range communications. Suitable technologies for implementing this module include radio frequency identification (RFID), infrared data association (IrDA), ultra-wideband (UWB), as well at the networking technologies commonly referred to as Bluetooth and ZigBee, to name a few.

The position-location module 115 identifies or otherwise obtains the location of the mobile terminal 100. If desired, this module may be implemented with a global positioning system (GPS) module.

Referring to FIG. 1, the audio/video (A/V) input unit 120 is configured to provide audio or video signal input to the mobile terminal 100. As shown, the A/V input unit 120 includes a camera 121 and a microphone 122. The camera 121 receives and processes image frames of still pictures or video, which are obtained by an image sensor in a video call mode or a photographing mode. And, the processed image frames can be displayed on the display 151.

The image frames processed by the camera 121 can be stored in the memory 160 or can be externally transmitted via the wireless communication unit 110. Optionally, at least two cameras 121 can be provided to the mobile terminal 100 according to environment of usage.

The microphone 122 receives an external audio signal while the portable device is in a particular mode, such as phone call mode, recording mode and voice recognition. This audio signal is processed and converted into electric audio data. The processed audio data is transformed into a format transmittable to a mobile communication base station via the mobile communication module 112 in case of a call mode. The microphone 122 typically includes assorted noise removing algorithms to remove noise generated in the course of receiving the external audio signal.

The user input unit 130 generates input data responsive to user manipulation of an associated input device or devices. Examples of such devices include a keypad, a dome switch, a touchpad (e.g., static pressure/capacitance), a jog wheel, a jog switch, etc.

The sensing unit 140 provides sensing signals for controlling operations of the mobile terminal 100 using status measurements of various aspects of the mobile terminal. For instance, the sensing unit 140 may detect an open/close status of the mobile terminal 100, relative positioning of components (e.g., a display and keypad) of the mobile terminal 100, a change of position of the mobile terminal 100 or a component of the mobile terminal 100, a presence or absence of user contact with the mobile terminal 100, orientation or acceleration/deceleration of the mobile terminal 100. As an example, consider the mobile terminal 100 being configured as a slide-type mobile terminal. In this configuration, the sensing unit 140 may sense whether a sliding portion of the mobile terminal is open or closed. Other examples include the sensing unit 140 sensing the presence or absence of power provided by the power supply 190, the presence or absence of a coupling or other connection between the interface unit 170 and an external device. And, the sensing unit 140 can include a proximity sensor 141.

The output unit 150 generates outputs relevant to the senses of sight, hearing, touch and the like. And, the output unit 150 includes the display 151, an audio output module 152, an alarm unit 153, and a haptic module 154 and the like.

The display 151 is typically implemented to visually display (output) information associated with the mobile terminal 100. For instance, if the mobile terminal is operating in a phone call mode, the display will generally provide a user interface (UI) or graphical user interface (GUI) which includes information associated with placing, conducting, and terminating a phone call. As another example, if the mobile terminal 100 is in a video call mode or a photographing mode, the display 151 may additionally or alternatively display images which are associated with these modes, the UI or the GUI.

The display module 151 may be implemented using known display technologies including, for example, a liquid crystal display (LCD), a thin film transistor-liquid crystal display (TFT-LCD), an organic light-emitting diode display (OLED), a flexible display and a three-dimensional display. The mobile terminal 100 may include one or more of such displays.

Some of the above displays can be implemented in a transparent or optically transmittive type, which can be named a transparent display. As a representative example for the transparent display, there is TOLED (transparent OLED) or the like. A rear configuration of the display 151 can be implemented in the optically transmittive type as well. In this configuration, a user is able to see an object in rear of a terminal body via the area occupied by the display 151 of the terminal body.

At least two displays 151 can be provided to the mobile terminal 100 in accordance with the implemented configuration of the mobile terminal 100. For instance, a plurality of displays can be arranged on a single face of the mobile terminal 100 in a manner of being spaced apart from each other or being built in one body. Alternatively, a plurality of displays can be arranged on different faces of the mobile terminal 100.

In case that the display 151 and a sensor for detecting a touch action (hereinafter called 'touch sensor') configures a mutual layer structure (hereinafter called 'touch screen'), it is possible to use the display 151 as an input device as well as an output device. In this case, the touch sensor can be configured as a touch film, a touch sheet, a touchpad or the like.

The touch sensor can be configured to convert pressure applied to a specific portion of the display 151 or a variation of capacitance generated from a specific portion of the display 151 into an electric input signal. Moreover, it is possible to configure the touch sensor to detect touch pressure as well as a touched position or size.

If a touch input is made to the touch sensor, one or more signals corresponding to the touch is transferred to a touch controller. The touch controller processes the signal(s) and then transfers the processed signal(s) to the controller 180. Therefore, the controller 180 is able to know whether a prescribed portion of the display 151 is touched.

Referring to FIG. 1, a proximity sensor (not shown in the drawing) can be provided to an internal area of the mobile terminal 100 enclosed by the touch screen or around the touch screen. The proximity sensor is the sensor that detects a presence or non-presence of an object approaching a prescribed detecting surface or an object existing around the proximity sensor using an electromagnetic field strength or infrared ray without mechanical contact. Hence, the proximity sensor has durability longer than that of a contact type sensor and also has utility wider than that of the contact type sensor.

The proximity sensor can include one of a transmittive photoelectric sensor, a direct reflective photoelectric sensor, a mirror reflective photoelectric sensor, a radio frequency oscillation proximity sensor, an electrostatic capacity proximity sensor, a magnetic proximity sensor, an infrared proximity sensor and the like. In case that the touch screen includes the electrostatic capacity proximity sensor, it is configured to detect the proximity of a pointer using a variation of electric field according to the proximity of the pointer. In this case, the touch screen (touch sensor) can be classified as the proximity sensor.

In the following description, for clarity, an action that a pointer approaches without contacting with the touch screen to be recognized as located on the touch screen is named 'proximity touch'. And, an action that a pointer actually touches the touch screen is named 'contact touch'. The meaning of the position on the touch screen proximity-touched by the pointer means the position of the pointer which vertically opposes the touch screen when the pointer performs the proximity touch.

The proximity sensor detects a proximity touch and a proximity touch pattern (e.g., a proximity touch distance, a proximity touch duration, a proximity touch position, a proximity touch shift state, etc.). And, information corresponding to the detected proximity touch action and the detected proximity touch pattern can be output to the touch screen.

The audio output module 152 functions in various modes including a call-receiving mode, a call-placing mode, a recording mode, a voice recognition mode, a broadcast reception mode and the like to output audio data which is received from the wireless communication unit 110 or is stored in the memory 160. During operation, the audio output module 152 outputs audio relating to a particular function (e.g., call received, message received, etc.). The audio output module 152 is often implemented using one or more speakers, buzzers, other audio producing devices, and combinations thereof.

The alarm unit 153 is output a signal for announcing the occurrence of a particular event associated with the mobile terminal 100. Typical events include a call received event, a message received event and a touch input received event. The alarm unit 153 is able to output a signal for announcing the event occurrence by way of vibration as well as video or audio signal. The video or audio signal can be output via the display 151 or the audio output unit 152. Hence, the display 151 or the audio output module 152 can be regarded as a part of the alarm unit 153.

The haptic module 154 generates various tactile effects that can be sensed by a user. Vibration is a representative one of the tactile effects generated by the haptic module 154. Strength and pattern of the vibration generated by the haptic module 154 are controllable. For instance, different vibrations can be output in a manner of being synthesized together or can be output in sequence.

The haptic module 154 is able to generate various tactile effects as well as the vibration. For instance, the haptic module 154 generates the effect attributed to the arrangement of pins vertically moving against a contact skin surface, the effect attributed to the injection/suction power of air though an injection/suction hole, the effect attributed to the skim over a skin surface, the effect attributed to the contact with electrode, the effect attributed to the electrostatic force, the effect attributed to the representation of hold/cold sense using an endothermic or exothermic device and the like.

The haptic module 154 can be implemented to enable a user to sense the tactile effect through a muscle sense of finger, arm or the like as well as to transfer the tactile effect through a direct contact. Optionally, at least two haptic modules 154 can be provided to the mobile terminal 100 in accordance with the corresponding configuration type of the mobile terminal 100.

The memory unit 160 is generally used to store various types of data to support the processing, control, and storage requirements of the mobile terminal 100. Examples of such data include program instructions for applications operating on the mobile terminal 100, contact data, phonebook data, messages, audio, still pictures, moving pictures, etc. And, a recent use history or a cumulative use frequency of each data (e.g., use frequency for each phonebook, each message or each multimedia) can be stored in the memory unit 160. Moreover, data for various patterns of vibration and/or sound output in case of a touch input to the touch screen can be stored in the memory unit 160.

The memory 160 may be implemented using any type or combination of suitable volatile and non-volatile memory or storage devices including hard disk, random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, multimedia card micro type memory, card-type memory (e.g., SD memory, XD memory, etc.), or other similar memory or data storage device. And, the mobile terminal 100 is able to operate in association with a web storage for performing a storage function of the memory 160 on Internet.

The interface unit 170 is often implemented to couple the mobile terminal 100 with external devices. The interface unit 170 receives data from the external devices or is supplied with the power and then transfers the data or power to the respective elements of the mobile terminal 100 or enables data within the mobile terminal 100 to be transferred to the external devices. The interface unit 170 may be configured using a wired/wireless headset port, an external charger port, a wired/wireless data port, a memory card port, a port for coupling to a device having an identity module, audio input/output ports, video input/output ports, an earphone port and/or the like.

The identity module is the chip for storing various kinds of information for authenticating a use authority of the mobile terminal 100 and can include User Identify Module (UIM), Subscriber Identify Module (SIM), Universal Subscriber Identity Module (USIM) and/or the like. A device having the identity module (hereinafter called 'identity device') can be manufactured as a smart card. Therefore, the identity device is connectible to the mobile terminal 100 via the corresponding port.

When the mobile terminal 110 is connected to an external cradle, the interface unit 170 becomes a passage for supplying the mobile terminal 100 with power from the cradle or a passage for delivering various command signals input from the cradle by a user to the mobile terminal 100. Each of the various command signals input from the cradle or the power can operate as a signal enabling the mobile terminal 100 to recognize that it is correctly loaded in the cradle.

The controller 180 typically controls the overall operations of the mobile terminal 100. For example, the controller 180 performs the control and processing associated with voice calls, data communications, video calls, etc. The controller 180 may include a multimedia module 181 that provides multimedia playback. The multimedia module 181 may be configured as part of the controller 180, or implemented as a separate component.

Moreover, the controller 180 is able to perform a pattern recognizing process for recognizing a writing input and a picture drawing input carried out on the touch screen as characters or images, respectively.

The power supply unit 190 provides power required by the various components for the mobile terminal 100. The power may be internal power, external power, or combinations thereof.

Various embodiments described herein may be implemented in a computer-readable medium using, for example, computer software, hardware, or some combination thereof. For a hardware implementation, the embodiments described herein may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a selective combination thereof. Such embodiments may also be implemented by the controller 180.

For a software implementation, the embodiments described herein may be implemented with separate software modules, such as procedures and functions, each of which perform one or more of the functions and operations described herein. The software codes can be implemented with a software application written in any suitable programming language and may be stored in memory such as the memory 160, and executed by a controller or processor, such as the controller 180.

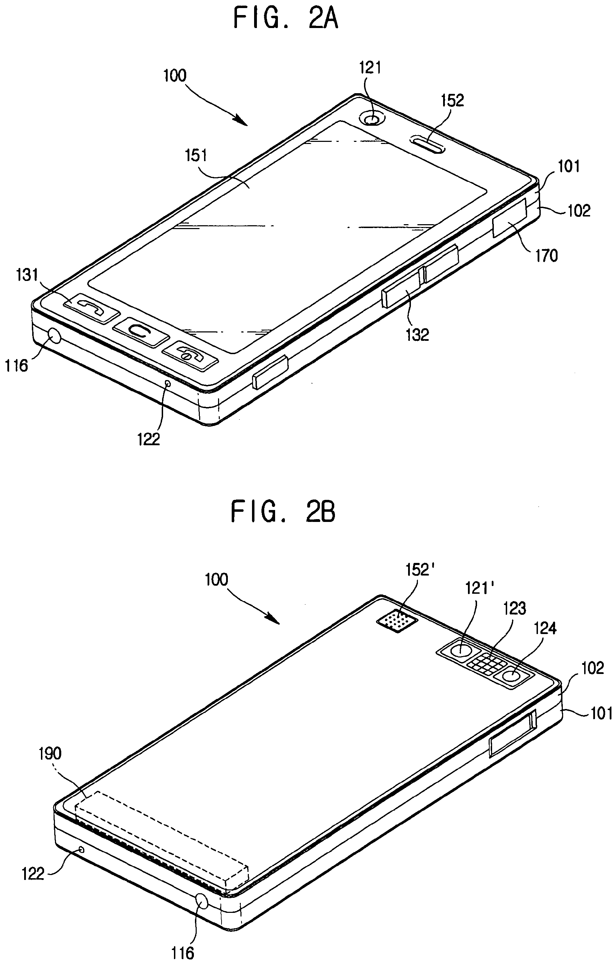

FIG. 2A is a front perspective diagram of a mobile terminal according to one example related to the present disclosure.

The mobile terminal 100 shown in the drawing has a bar type terminal body. Yet, the mobile terminal 100 may be implemented in a variety of different configurations. Examples of such configurations include folder-type, slide-type, rotational-type, swing-type and combinations thereof. For clarity, further disclosure will primarily relate to a bar-type mobile terminal 100. However such teachings apply equally to other types of mobile terminals.

Referring to FIG. 2A, the mobile terminal 100 includes a case (casing, housing, cover, etc.) configuring an exterior thereof. In the present example, the case can be divided into a front case 101 and a rear case 102. Various electric/electronic parts are loaded in a space provided between the front and rear cases 101 and 102. Optionally, at least one middle case can be further provided between the front and rear cases 101 and 102 in addition.

The cases 101 and 102 are formed by injection molding of synthetic resin or can be formed of metal substance such as stainless steel (STS), titanium (Ti) or the like for example.

A display 151, an audio output unit 152, a camera 121, user input units 130/131 and 132, a microphone 122, an interface 180 and the like can be provided to the terminal body, and more particularly, to the front case 101.

The display 151 occupies most of a main face of the front case 101. The audio output unit 151 and the camera 121 are provided to an area adjacent to one of both end portions of the display 151, while the user input unit 131 and the microphone 122 are provided to another area adjacent to the other end portion of the display 151. The user input unit 132 and the interface 170 can be provided to lateral sides of the front and rear cases 101 and 102.

The input unit 130 is manipulated to receive a command for controlling an operation of the terminal 100. And, the input unit 130 is able to include a plurality of manipulating units 131 and 132. The manipulating units 131 and 132 can be named a manipulating portion and may adopt any mechanism of a tactile manner that enables a user to perform a manipulation action by experiencing a tactile feeling.

Content input by the first or second manipulating unit 131 or 132 can be diversely set. For instance, such a command as start, end, scroll and the like is entered by means of the first manipulating unit 131. And, a command for volume adjustment of sound output from the audio output unit 152, a command for switching to a touch recognizing mode of the display 151 or the like can be entered by means of the second manipulating unit 132.

FIG. 2B is a perspective diagram of a backside of the terminal shown in FIG. 2A.

Referring to FIG. 2B, a second camera 121' can be additionally provided to a backside of the terminal body, and more particularly, to the rear case 102. The camera 121' has a photographing direction that is substantially opposite to that of camera 121 shown in FIG. 2A and may have pixels differing from those of camera 121.

Preferably, for instance, camera 121 has low pixels enough to capture and transmit a picture of user's face for a video call, while camera 121' has high pixels for capturing a general subject for photography without transmitting the captured subject. And, each of the cameras 121 and 121' can be installed at the terminal body to be rotated or popped up.

A flash 123 and a mirror 124 are additionally provided adjacent to the camera 121'. The flash 123 projects light toward a subject in case of photographing the subject using the camera 121'. In case that a user attempts to take a picture of the user (self-photography) using the camera 121', the mirror 124 enables the user to view user's face reflected by the mirror 124.

An additional audio output unit 152' can be provided to the backside of the terminal body. The additional audio output unit 152' is able to implement a stereo function together with the former audio output unit 152 shown in FIG. 2A and may be used for implementation of a speakerphone mode in talking over the terminal.

A broadcast signal receiving antenna 124 can be additionally provided to the lateral side of the terminal body as well as an antenna for communication or the like. The antenna 124 constructing a portion of the broadcast receiving module 111 shown in FIG. 1 can be retractably provided to the terminal body.

A power supply unit 190 for supplying power to the terminal 100 is provided to the terminal body. And, the power supply unit 190 can be configured to be built within the terminal body. Alternatively, the power supply unit 190 can be configured to be detachably connected to the terminal body.

A touchpad 135 for detecting a touch can be additionally provided to the rear case 102. The touchpad 135 can be configured in a light transmittive type like the display 151. In this case, if the display 151 is configured to output visual information from its both faces, it is possible to recognize the visual information via the touchpad 135 as well. The information output from both of the faces can be entirely controlled by the touchpad 135. Alternatively, a display is further provided to the touchpad 135 so that a touch screen can be provided to the rear case 102 as well.

The touchpad 135 is activated by interconnecting with the display 151 of the front case 101. The touchpad 135 can be provided in rear of the display 151 in parallel. The touchpad 135 can have a size equal to or smaller than that of the display 151.

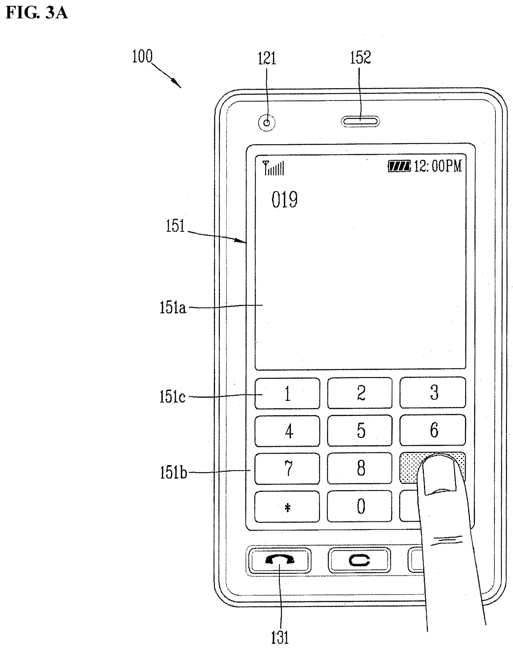

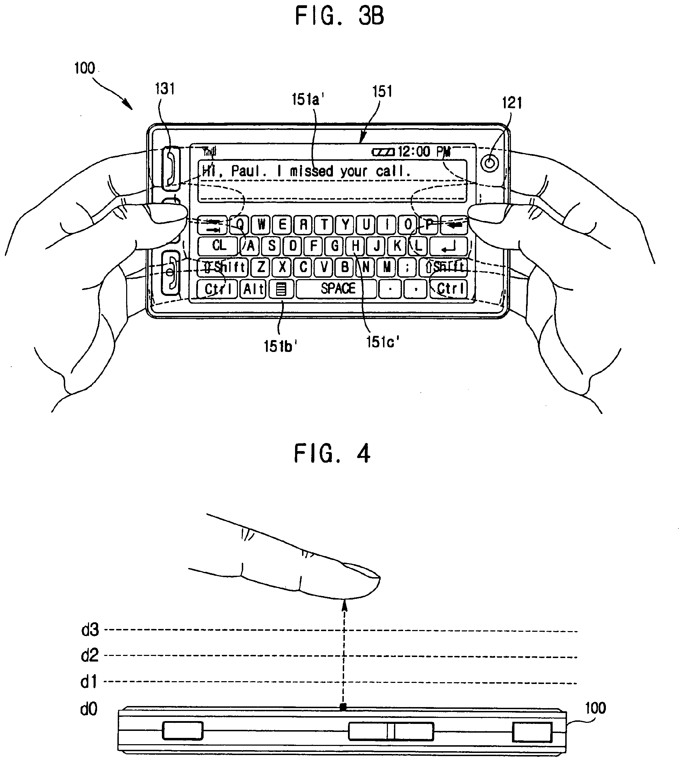

Interconnected operational mechanism between the display 151 and the touchpad 135 are explained with reference to FIG. 3A and FIG. 3B as follows.

FIG. 3A and FIG. 3B are front-view diagrams of a terminal according to one example related to the present disclosure for explaining an operational state thereof.

First of all, various kinds of visual information can be displayed on the display 151. Such information can be displayed in characters, numerals, symbols, graphics, icons and the like.

In order to input the information, at least one of the characters, numerals, symbols, graphics and icons are represented as a single predetermined array to be implemented in a keypad formation. And, this keypad formation can be so-called 'soft keys'.

FIG. 3A shows that a touch applied to a soft key is input through a front face of a terminal body.

The display 151 is operable through an entire area or by being divided into a plurality of regions. In the latter case, a plurality of the regions can be configured interoperable.

For instance, an output window 151a and an input window 151b are displayed on the display 151. A soft key 151c' representing a digit for inputting a phone number or the like is output to the input window 151b. If the soft key 151c' is touched, a digit corresponding to the touched soft key is output to the output window 151a. If the first manipulating unit 131 is manipulated, a call connection for the phone number displayed on the output window 151a is attempted.

FIG. 3B shows that a touch applied to a soft key can be input through the rear face of the terminal body. If FIG. 3A shows a case where the terminal body is vertically arranged (portrait), FIG. 3B shows a case where the terminal body is horizontally arranged (landscape). And, the display 151 can be configured to change the output picture according to the arranged direction of the terminal body.

FIG. 3B shows a text input mode activated in the terminal.

An output window 151a' and an input window 151b' are displayed on the display 151. A plurality of soft keys 151c' representing at least one of characters, symbols and digits can be arranged in the input window 151b'. The soft keys 151c' can be arranged in the QWERTY key formation.

If the soft keys 151c' are touched through the touchpad (cf. '135' in FIG. 2B), the characters, symbols and digits corresponding to the touched soft keys are output to the output window 151a'. Thus, the touch input via the touchpad 135 is advantageous in that viewing of the soft keys 151c' may not be blocked by a touching finger, as compared to the touch input via the front display 151. In case that the display 151 and the touchpad 135 are configured transparent, it is possible to visually check fingers located at the backside of the terminal body. Hence, more correct touch inputs are possible.

Besides, the display 151 or the touchpad 135 can be configured to receive a touch input by scrolling. A user scrolls the display 151 or the touchpad 135 to shift a cursor or pointer located at an entity (e.g., icon or the like) displayed on the display 151. Furthermore, in case that a finger is shifted on the display 151 or the touchpad 135, a path of the shifted finger can be visually displayed on the display 151. This may be useful in editing an image displayed on the display 151.

To cope with a case that both of the display (touch screen) 151 and the touchpad 135 are touched together within a predetermined time range, one function of the terminal can be executed. The above case of the simultaneous touch may correspond to a case that the terminal body is held by a user using a thumb and a first finger (clamping). The above function can include activation or deactivation for the display 151 or the touchpad 135.

The proximity sensor 141 described with reference to FIG. 1 is explained in detail with reference to FIG. 4 as follows.

FIG. 4 is a conceptual diagram for explaining a proximity depth of a proximity sensor.

Referring to FIG. 4, when such a pointer as a user's finger, a pen and the like approaches the touch screen, a proximity sensor 141 provided within or in the vicinity of the touch screen detects the approach of the pointer and then outputs a proximity signal.

The proximity sensor 141 can be configured to output a different proximity signal according to a distance between the pointer and the proximity-touched touch screen (hereinafter named 'proximity depth).

In FIG. 4, exemplarily shown is a cross-section of the touch screen provided with a proximity sensor capable to three proximity depths for example. And, it is understood that a proximity sensor capable of proximity depths amounting to the number smaller than 3 or equal to or greater than 4 is possible.

In detail, in case that the pointer is fully contacted with the touch screen (d0), a contact touch is recognized. In case that the pointer is located to be spaced apart from the touch screen in a distance smaller than d1, a proximity touch to a first proximity depth is recognized. In case that the pointer is located to be spaced apart from the touch screen in a distance between d1 and d2, a proximity touch to a second proximity depth is recognized. In case that the pointer is located to be spaced apart from the touch screen in a distance smaller than d3 or equal to or greater than d2, a proximity touch to a third proximity depth is recognized. In case that the pointer is located to be spaced apart from the touch screen in a distance equal to or greater than d3, a proximity touch is recognized.

Hence, the controller 180 is able to recognize the proximity touch as one of various input signals according to the proximity depth and position of the pointer. And, the controller 180 is able to perform various operation controls according to the various input signals.

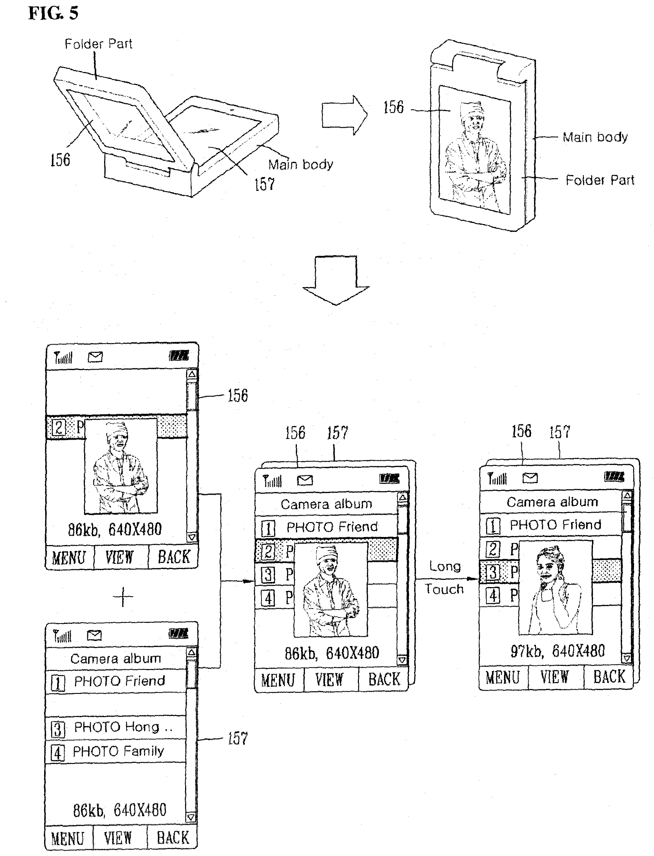

FIG. 5 is a conceptual diagram for exemplifying a method of controlling a touch action in a state that a pair of displays 156 and 157 overlap each other.

Referring to FIG. 5, a folder type terminal is shown, in which a folder part is connected to a main body so that it can be folded or unfolded.

A first display 156 provided in the folder part is a light-transmittive or transparent type such as TOLED, while a second display 157 provided in the main body may be a non-transmittive type such as LCD. Each of the first and second displays 156 and 157 can include a touch-inputtable touch screen.

For instance, if a touch (contact touch or proximity touch) onto the first display or TOLED 156 is detected, the controller 180 selects or runs at least one image from an image list displayed on the TOLED 156 depending on the touch type and/or touch duration.

In the following description, a method of controlling information displayed on a different display or an LCD 157 in case of an touch to the TOLED 156 externally exposed in an overlapped configuration is explained, in which the description is made with reference to input types classified as touch, long touch, long-touch & drag and the like.

In the overlapped state (a state that mobile terminal is closed or folded), the TOLED 156 is configured to overlap the LCD 157. In this state, if a touch different from a touch for controlling an image displayed on the TOLED 156, e.g., a long touch (e.g., a touch having a duration of at least 2 seconds) is detected, the controller 180 enables at least one image to be selected from an image list displayed on the LCD 157 depending on the touch input. The result from running the selected image is displayed on the TOLED 156.

The long touch is usable in selectively shifting a specific one of entities displayed on the LCD 157 to the TOLED 156 (without an action for running the corresponding entity). In particular, if a user performs a long touch on a prescribed region of the TOLED 156 corresponding to a specific entity of the LCD 157, the controller 180 controls the corresponding entity to be displayed by being shifted to the TOLED 156.

Meanwhile, an entity displayed on the TOLED 156 can be displayed by being shifted to the LCD 157 according to such a prescribed touch input to the TOLED 156 as flicking, swirling and the like. In the drawing, exemplarily shown is that a second menu displayed on the LCD 157 is displayed by being shifted to the TOLED 156.

In case that another input, e.g. a drag, is additionally detected together with a long touch, the controller 180 executes a function associated with an image selected by the long touch so that a preview picture for the image can be displayed on the TOLED 156 for example. In the drawing, exemplarily shown is that a preview (picture of a male) for a second menu (image file) is performed.

While the preview image is output, if a drag toward a different image is additionally performed on the TOLED 156 by maintaining the long touch, the controller 180 shifts a selection cursor (or a selection bar) of the LCD 157 and then displays the image selected by the selection cursor on the preview picture (picture of female). Thereafter, after completion of the touch (long touch and drag), the controller 180 displays the initial image selected by the long touch.

The touch action (long touch and drag) is identically applied to a case where a slide (action of a proximity touch corresponding to the drag) is detected together with a long proximity touch (e.g., a proximity touch maintained for at least 2 or 3 seconds) to the TOLED 156.

In case that a touch action differing from the above-mentioned touch actions is detected, the controller 180 is able to operate in the same manner of the general touch controlling method.

The method of controlling the touch action in the overlapped state is applicable to a terminal having a single display. And, the method of controlling the touch action in the overlapped state is applicable to terminals differing from the folder type terminal having a dual display as well.

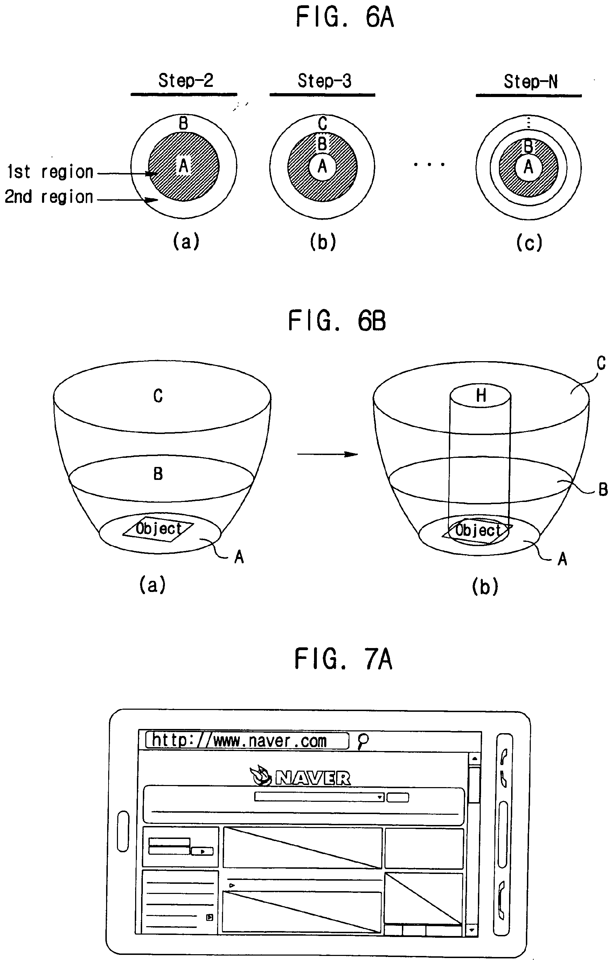

FIG. 6A and FIG. 6B are diagrams for the description of a proximity touch recognition area and a tactile effect generation region.

FIG. 6A represents such an object as an icon, a menu item and the like in a circle type for clarity and convenience of explanation.

A region for displaying an object on the display 151, as shown in (a) of FIG. 6A, can be divided into a first central region A and a second region B surrounding the first region A. The first and second regions A and B can be configured to generate tactile effects differing from each other in strength or pattern. For instance, the first and second regions can be configured to generate 2-step vibrations in a manner of outputting a first vibration if the second region B is touched or outputting a second vibration greater than the first vibration if the first region A is touched.

In case that both of the proximity touch recognition region and the haptic region are simultaneously set in the region having the object displayed therein, it is possible to set the haptic region for generating the tactile effect to be different from the proximity touch recognition region for detecting the proximity signal. In particular, it is possible to set the haptic region to be narrower or wider than the proximity touch recognition region. For instance, in (a) of FIG. 6A, it is possible to set the proximity touch recognition region to the area including both of the first and second regions A and B. And, it is possible to set the haptic region to the first region A.

It is possible to discriminate the region having the object displayed therein into three regions A, B and C as shown in (b) of FIG. 6A. Alternatively, it is possible to discriminate the region having the object displayed therein into N regions (N>4) as shown in (c) of FIG. 6A. And, it is possible to configure each of the divided regions to generate a tactile effect having a different strength or pattern. In case that a region having a single object represented therein is divided into at least three regions, it is possible to set the haptic region and the proximity touch recognition region to differ from each other depending on the use environment.

It is possible to configure the size of the proximity touch recognition region of the display 151 to vary according to the proximity depth. In particular, referring to (a) of FIG. 6B, the proximity touch recognition region is configured to decrease by C→B→A according to the proximity depth for the display 151. On the contrary, the proximity touch recognition region is configured to increase by C→B→A according to the proximity depth for the display 151. Despite the above configuration, it is possible to set the haptic region to have a predetermined size, as the region 'H' shown in (b) of FIG. 6B, regardless of the proximity depth for the display 151.

In case of dividing the object-displayed region for the setting of the haptic region or the proximity touch recognition region, it is possible to use one of various schemes of horizontal/vertical division, radial division and combinations thereof as well as the concentric circle type division shown in FIG. 6A.

In the following description, the characteristic part of the terminal according to an embodiment of the present disclosure is explained.

The display of the mobile terminal related to an embodiment of the present disclosure may include an address input window showing an address of the accessed Internet web page, and a touch screen having a virtual key pad.

The controller 180 in the mobile terminal executes an action generating a duplicated window containing a replica of the contents of the address window when the contents are touched and dragged. The controller 180 can then respond to a dragging motion by moving the duplicated window accordingly. Then the controller 180 stores a web page address contained the address input window when a dropping action following the dragging motion takes place in a key area of the virtual key pad. The controller 180 can then assign the address to a short cut code associated with the key.

When some addresses are assigned to short-cut codes associated with some keys by means of the actions of the controller 180, the controller may control the display of the virtual key pad to visually distinguish the keys associated with short-cut codes to which web page addresses are assigned from the other keys having no associated short-cut code. For example, the boundary of the keys having associated short-cut codes may be displayed thicker than others.

After some addresses are assigned to short-cut codes of some keys, the controller 180 may cause the display of a web page address when a user makes a proximity touch on a key of the virtual key pad associated with a short-cut code to which the web page address is assigned. For instance, an assigned address may be displayed in a bubble window.

Alternatively, the controller 180 may display a web page address assigned to a key when a touch (contact touch) is made on such key of the virtual key pad.

Alternatively, the controller 180 may access a web page address assigned to a short cut code associated with a key when a (contact) touch is made on the key of the virtual key pad and maintained for a predetermined time.

According to an embodiment of the present disclosure, a method of using the Internet may be divided into a method for assigning a web page address to a short cut code which may be associated with a key, and a method for accessing the web page by using the such a key having an associated short cut. In the method for using the Internet, the subject is typically a mobile terminal. Practically, the controller installed in the mobile terminal executes this method.

The method for assigning the web page address to a short cut code may comprise: a) detecting a drag and drop motion relative to contents of an address input window; b) determining a key of a virtual key pad having a position where the drag and drop motion is ended; and c) storing an address contained in the address input window and assigning the address to a short cut code which is associated with the key.

Moreover, the step a) may comprise detecting a touch in an area where the address input window contents are written, detecting a dragging motion of the touched point which is maintained in touch, and moving a duplicated window according to the motion of the touched point in response to the dragging motion, the duplicated window containing a replica of the web page address written in the address input window.

Furthermore, after step b), the method for assigning the web page address to a short cut code may further comprise displaying a window informing that a web page address is assigned to a short cut code being associated with the key.

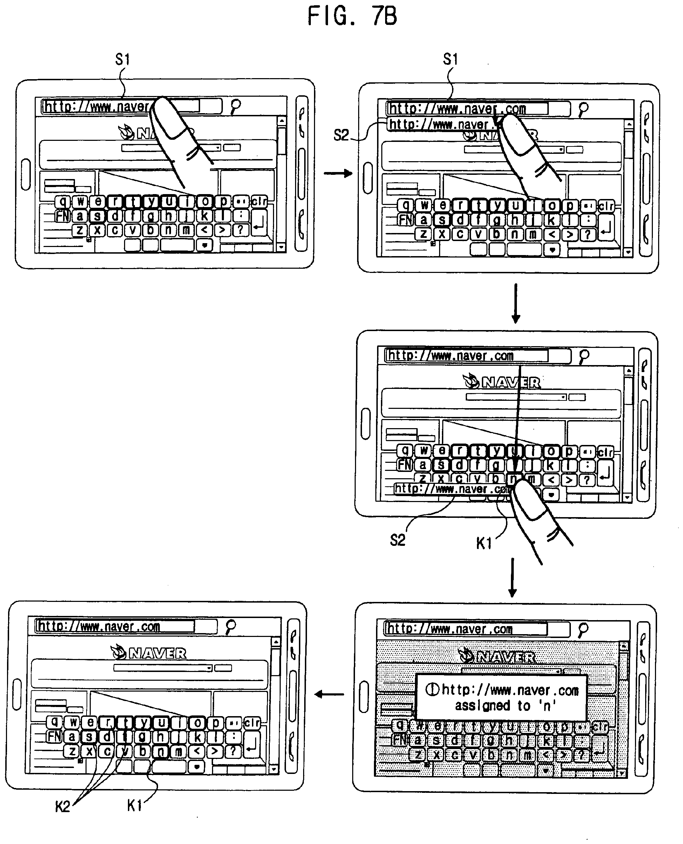

In the following description, an embodiment which is a method for assigning a web page address to a short cut code will be explained referring to FIG. 7A and FIG.7B.

FIG. 7A is a diagram of an image on the screen of the mobile terminal for displaying a web page according to an embodiment of the present disclosure. As shown in FIG 7A, an address input window where the accessed web page address is written, is positioned at the top portion of the screen.

FIG. 7B is a diagram of an image on the screen of the mobile terminal for illustrating steps of assigning a short-cut code to the web page in an embodiment of the present disclosure from the image of FIG. 7A.

When a user touches an area S 1 where the address of the accessed web page is written in the address input window, as shown a first image view of FIG. 7B, the controller causes a virtual key pad to be displayed in the bottom part of the screen.

When the user begins to drag while maintaining the touch after having touched the area S 1 where the address is written, as shown in the second image view, a second window where the contents of the address input window is duplicated, is generated.

As shown in the third image view, the user may drag the second window where the present web page address is duplicated to the location of a key K1 of the virtual key pad which is placed at the bottom part of the screen, and then drop it at that location. This process shown in the first to third image view of FIG. 7B corresponds to step a) in the method for assigning the web page address to the short cut code.

Then, as shown in the forth image view of FIG. 7B, a message window is displayed, wherein the message window informs that the address is assigned to a short cut code associated with the key ('n' in FIG. 7B). As shown in the fifth image view of FIG. 7B, the key is displayed with boundaries thicker than other keys in order to show that the key has a short cut code associated therewith.

A first method for accessing the web page by using a key having an associated short cut code may comprise: g) receiving a touch in the area of a key on the virtual key pad by a pointing device; h) displaying a web page address assigned to a short cut code associated with the touched key in the address input window; and i) accessing the web page having the displayed web address, when no signal exists in predetermined period (preferably, 0,5 second to 2 second), or if a key indicating a progress (such as the 'enter' key) is input.

In addition, the method may further comprise, before step g), receiving a proximity touch in the area of a key on the virtual key pad by a pointing device and displaying a web page address assigned to a short cut code associated with the key receiving the proximity touch.

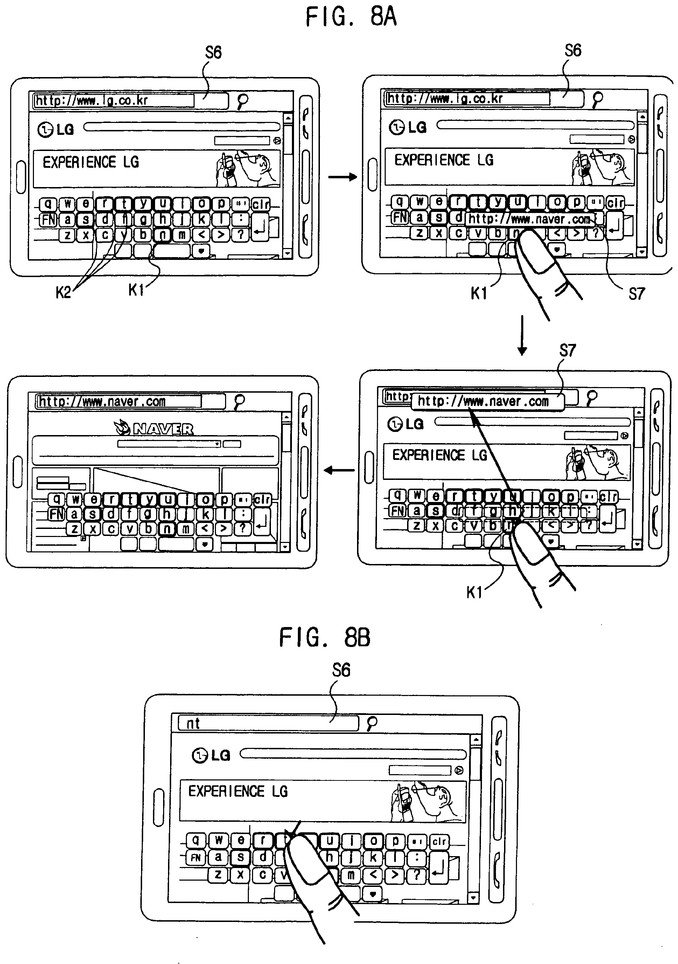

In the following description, an embodiment which is a first method for accessing the web page by using a key having an associated short cut code will be explained referring to FIG. 8A and FIG. 8B.

FIG. 8A is a diagram of an image on the screen of the mobile terminal for illustrating steps of an embodiment for accessing a web page using a short-cut code assigned by as explained with reference to FIG. 7B.

In the bottom portion of the first image view, the virtual key pad is overlaid. When browsing web page, the key pad is typically not overlaid. It is convenient if the virtual key pad comes to be displayed when it is available for the user to input the address in the address input window by means of touching the address input window during the web browsing.

In the second image view, when the user makes a proximity touch on one of the keys K1, K2 having associated short cut codes, the web page address assigned to the short cut code associated with the proximately touched key is displayed in the bubble window (S7).

In the third image view, when the user touches one K1 of the keys assigning having an associated short cut code by means of his finger (pointing device), the contents of the address input window are changed to the web page address assigned to the short cut code associated with the touched key K1. In other words, the mobile terminal, in the third image view, has executed steps g) and h), where step g) is a step of receiving a touch in the area of a key on the virtual key pad by a pointing device, and step h) is a step of displaying a web page address assigned to a short cut code associated with the touched key in the address input window.

Here, the browsing screen is kept except that the contents of the address input window is changed. As shown FIG. 8A, in order to add the visual and aesthetic effect, an animation of the bubble window where the changed web page address is written is generated to move to the address input window.

After that, when no signal is input during the some period (properly 0.5 second to 2 second) or when the enter key which means the progress is touched, as shown in FIG, step i) is executed, i.e. a step of accessing the web page where the contents is changed to be written in the address input window (S6).

In the third image view, if the user inputs another key K3 instantly, the mobile terminal determines that it is a direct address input process from the address input window S6 as in the prior art. Then, as shown in the FIG. 8B, the input keys ('nt' in FIG. 8B) are written in the address input window continuously.

Alternatively, the method for accessing the web page using a key having an associated short cut code may comprise 1) receiving a touch in the area of a key on a virtual key pad by a pointing device for predetermined time, and m) accessing a web page having a web page address assigned to a short cut code associated with the touched key.

Moreover, the method may further comprise, before the step 1), displaying a web page address assigned to a short cut code associated with a key when a pointing device touches or makes a proximity touch on the key on the virtual key pad.

Furthermore, the method may further comprise displaying a character representing the touched key in the address input window before step 1). Step 1) then comprises displaying a web page address assigned to a short cut code associated with the touched key in the address input window when the predetermined time has elapsed with the touch maintained.

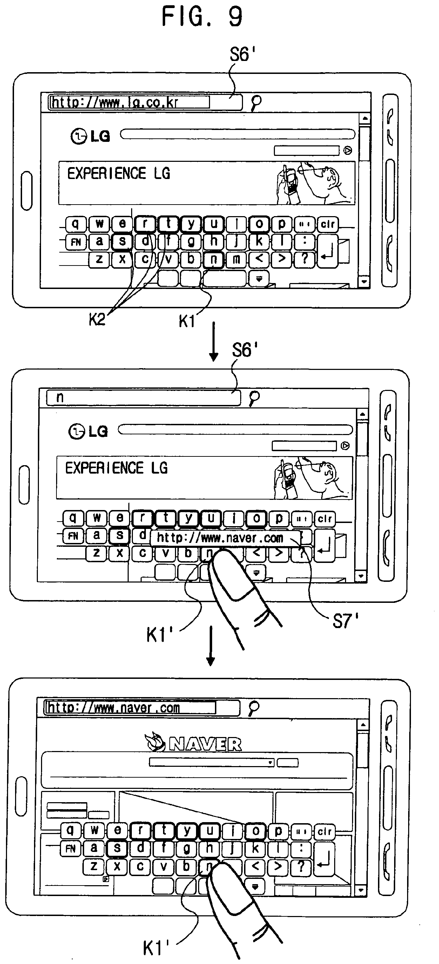

In the following description, an embodiment of the alternative method for accessing the web page by using a key having an associated short cut code will be explained referring to FIG. 9.

FIG. 9 shows diagrams of an image on the screen of mobile terminal for showing the method of accessing the web page using a short cut code which assigned as explained with reference to FIG. 7B. in case that some keys Kl', K2' in the virtual key pad have associated short cut codes assigned to web page addresses.

In the bottom portion of the first image view of FIG. 9, the virtual key pad is overlaid. It is normal that the virtual key pad is not displayed while the web page browsing is executed. During the web page browsing, when the user touches the address input window S6' so that the address input window comes to be a state in which an address may be written, the controller 180 causes the virtual key pad to be overlaid. The keys associated with short cut codes are displayed with thicker boundaries in order to be readily identified.

In the second image view of FIG. 9, the user touches one of the keys K1', K2 associated with short cut codes. The web page address assigned to the short cut code is then displayed in the bubble window S7' near the touched key K1'. At this moment, the address input window S6', similar to the case of FIG. 8A, may be changed to display the web page address which is assigned to the short cut code.

In the second image view of FIG. 9, when the user keeps the touch state of the keyKkl' during a predetermined period (preferably 0.5 second to 2 second (i.e. "long touch"), as shown in the third image view, the contents of the address input window is changed to the web page address which is assigned to the short cut code associated with the key on which the touch is maintained. Then, the mobile terminal accesses the web page having the changed web address to display a new browsing screen. In other words, the mobile terminal executes step 1) and step m), where step 1) is a step of receiving a touch in the area of a key on the virtual key pad by a pointing device for predetermined time, and step m) is a step of accessing a web page having a web page address assigned to a short cut code associated with the touched key.

If, in the second image view of FIG. 9, the user terminates the touch of the key K1' before the predetermined time or inputs other key of the virtual key pad, the controller 180 of the mobile terminal determines that it is a direct input process from the address input window as in the prior art. The input keys are then written in the address input window continuously.

Moreover, according to an embodiment of the present disclosure, the aforementioned method may be realized in the form of a storage medium where a program is stored as readable code by a processor embodying the controller 180. For example, the readable storage medium may be a ROM, a RAM, a CD-ROM, a magnetic tape, a floppy disk, an optical data storage device and so on. Also, the carrier wave (for example, the transmission through the Internet) is available for readable storage medium.

## Claims

1. A terminal adapted to access a web page address, the terminal comprising:
a touch screen for displaying an address input window where an address of an accessed Internet web page is written and a virtual key pad; and
a controller (180) configured to generate a duplicated window (S2) in response to detection of a touch in an area (S1) of the address input window where said web page address is written, the duplicated window (S2) containing a replica of the web page address written in the address input window, to move the duplicated window in response to a dragging motion following the detected touch while the touch is maintained, to store the web page address when a dropping action subsequent to the dragging motion takes place in a key area of the virtual key pad, and to assign said web page address to a short cut code associated with a key (K1) having said key area in the virtual key pad, wherein the virtual key pad includes the qwerty key pad.

2. The terminal as claimed in claim 1,
wherein the controller (180) is configured to generate a bubble window (S7, S7') displaying a web page address assigned to a short cut code associated with a key of the virtual key pad in response to a proximity touch on said key of the virtual key pad.

3. The terminal as claimed in claim 1,
wherein the controller (180) is configured to display a web page address assigned to a short cut code associated with a key of the virtual key pad in response to a touch on said key of the virtual key pad.

4. The terminal as claimed in claim 1,
wherein the controller (180) is configured to access a web page address assigned to a short cut code associated with a key of the virtual key pad in response to a touch maintained for a predetermined time on said key of the virtual key pad.

5. The terminal as claimed in claim 1,
wherein the controller (180) is configured to display the virtual keypad with a distinction between keys having a short cut code associated therewith and other keys without short cut codes.

6. A method of operating a terminal for accessing a web page address, the terminal comprising a touch screen for displaying an address input window where an address of an accessed Internet web page is written and a virtual key pad, the method comprising the steps of:
a) detecting a touch in an area (S1) of the address input window where said web page address is written;
b) generating, in response to a dragging motion following the detected touch while the touch is maintained, a duplicated window (S2) in response to said detecting of a touch in an area of the address input window where said web page address is written, the duplicated window (S2) containing a replica of the web page address written in the address input window;
c) moving said duplicated window (S2) in response to the dragging motion;
d) determining a key of a virtual key pad having a position where the drag and drop motion is ended; and
e) storing said address contained in the address input window and assigning said address to a short cut code associated with said key, wherein the virtual key pad includes the qwerty key pad.

7. The method as claimed in claim 6, further comprising, after step e),
displaying a window informing that a web page address is assigned to a short cut code associated with the key.

8. The method as claimed in claim 6, further comprising, after step e),
g) receiving a touch in the area of a key on the virtual key pad by a pointing device;
h) displaying a web page address assigned to a short cut code associated with the touched key in the address input window; and
i) accessing the web page having the displayed web address, when an enter key which means changing contents is touched.

9. The method as claimed in claim 8, further comprising, after step e) and before step g), receiving a proximity touch in the area of a key on the virtual key pad by a pointing device; and
displaying a web page address assigned to a short cut code associated with the key receiving the proximity touch.

10. The method as claimed in claim 6, further comprising, after step e),
1) receiving a touch in the area of a key on the virtual key pad by a pointing device for a predetermined time; and
m) accessing a web page having a web page address assigned to a short cut code associated with the touched key.

11. The method as claimed in claim 10, further comprising, after step e) and before step 1),
displaying a web page address assigned to a short cut code associated with a key of the virtual key pad when a pointing device touches or makes a proximity touch on said key on the virtual key pad.

12. The method as claimed in claim 10, further comprising, before step 1), displaying a character representing the touched key in the address input window, and
wherein step 1) comprises:
displaying a web page address assigned to a short cut code associated with the touched key in the address input window when the predetermined time has elapsed with the touch maintained.

## Patentansprüche

1. Endgerät, das geeignet ist, um auf eine Webseitenadresse zuzugreifen, wobei das Endgerät aufweist:
einen Berührungsbildschirm zum Anzeigen eines Adresseingabefensters, in das eine Adresse einer zugegriffenen Internetwebseite geschrieben ist, und einer virtuellen Tastatur; und
eine Steuerung (180), die konfiguriert ist, um ansprechend auf die Erfassung einer Berührung in einem Bereich (S1) des Adresseingabefensters, wo die Webseitenadresse geschrieben ist, eine kopiertes Fenster (S2) zu erzeugen, wobei das kopierte Fenster (S2) eine Kopie der Webseitenadresse enthält, die in das Adresseingabefenster geschrieben ist, um das kopierte Fenster in einer Ziehbewegung, die der erfassten Berührung folgt, während die Berührung aufrecht erhalten wird, zu bewegen, um die Webseitenadresse zu speichern, wenn anschließend an die Ziehbewegung eine Ablegeaktion in einem Tastenbereich der virtuellen Tastatur stattfindet, und der genannten Webseitenadresse ein Tastaturkürzel zuzuweisen, das zu einer Taste (K1) mit diesem Tastaturbereich in der virtuellen Tastatur gehört, wobei die virtuelle Tastatur die QWERTY-Tastatur aufweist.

2. Endgerät nach Anspruch 1,
wobei die Steuerung (180) konfiguriert ist, um ein Bubble-Fenster (S7, S7') zu erzeugen, das ansprechend auf eine Näherungsberührung auf der Taste der virtuellen Tastatur eine Webseitenadresse anzeigt, die einem Tastaturkürzel zugewiesen ist, das zu einer Taste der virtuellen Tastatur gehört.

3. Endgerät nach Anspruch 1,
wobei die Steuerung (180) konfiguriert ist, um ansprechend auf eine Berührung auf der Taste der virtuellen Tastatur eine Webseitenadresse anzuzeigen, die einem Tastaturkürzel zugewiesen ist, das zu einer Taste der virtuellen Tastatur gehört.

4. Endgerät nach Anspruch 1,
wobei die Steuerung (180) konfiguriert ist, um ansprechend auf eine Berührung auf der Taste der virtuellen Tastatur, die eine vorgegebene Zeit lang aufrecht erhalten wird, auf eine Webseitenadresse, die einem Tastaturkürzel zugewiesen ist, zuzugreifen.

5. Endgerät nach Anspruch 1,
wobei die Steuerung (180) konfiguriert ist, um die virtuelle Tastatur mit einer Unterscheidung zwischen Tasten mit einem zu ihnen gehörigen Tastaturkürzel und anderen Tasten ohne Tastaturkürzel anzuzeigen.

6. Verfahren zum Bedienen eines Endgeräts zum Zugreifen auf eine Webseitenadresse, wobei das Endgerät einen Berührungsbildschirm zum Anzeigen eines Adresseingabefensters, in das eine Adresse einer zugegriffenen Internetwebseite geschrieben ist, und einer virtuellen Tastatur aufweist, wobei das Verfahren die folgenden Schritte aufweist:
a) Erfassen einer Berührung in einem Bereich (S1) des Adresseingabefensters, wo die Webseitenadresse geschrieben ist;
b) ansprechend auf eine Ziehbewegung anschließend an die erfasste Berührung, während die Berührung aufrecht erhalten wird, Erzeugen eines kopierten Fensters (S2), wobei das kopierte Fenster (S2) eine Kopie der Webseitenadresse enthält, die in das Adresseingabefenster geschrieben ist;
c) Bewegen des kopierten Fensters (S2) ansprechend auf die Ziehbewegung;
d) Bestimmen einer Taste einer virtuellen Tastatur mit einer Position, wo die Zieh- und Ablegebewegung beendet wird; und
e) Speichern der in dem Adresseingabefenster enthaltenen Adresse und Zuweisen der Adresse an ein Tastaturkürzel, das zu der Taste gehört, wobei die virtuelle Tastatur eine QWERTY-Tastatur aufweist.

7. Verfahren nach Anspruch 6, das ferner nach dem Schritt e) aufweist:
Anzeigen eines Fensters, das darüber informiert, dass eine Webseitenadresse einem Tastaturkürzel zugewiesen ist, das zu der Taste gehört.

8. Verfahren nach Anspruch 6, das ferner nach dem Schritt e) aufweist:
g) Empfangen einer Berührung in dem Bereich einer Taste auf der virtuellen Tastatur durch eine Zeigevorrichtung;
h) Anzeigen einer Webseitenadresse, die einem Tastaturkürzel zugewiesen ist, das zu der berührten Taste in dem Adresseingabefenster gehört; und
i) Zugreifen auf die Webseite mit der angezeigten Webadresse, wenn eine Enter-Taste, die das Ändern von Inhalten bedeutet, berührt wird.

9. Verfahren nach Anspruch 8, das ferner nach dem Schritt e) und vor dem Schritt g) aufweist:
Empfangen einer Näherungsberührung in dem Bereich einer Taste auf der virtuellen Tastatur durch eine Zeigevorrichtung; und
Anzeigen einer Webseitenadresse, die einem Tastaturkürzel zugewiesen ist, das zu der Taste gehört, welche die Berührungseingabe empfängt.

10. Verfahren nach Anspruch 6, das ferner nach dem Schritte e) aufweist:
l) eine vorgegebene Zeit lang Empfangen einer Eingabe in dem Bereich einer Taste auf der virtuellen Tastatur durch eine Zeigevorrichtung; und
m) Zugreifen auf eine Webseite mit einer Webseitenadresse, die einem Tastaturkürzel zugeweisen ist, das zu der berührten Taste gehört.

11. Verfahren nach Anspruch 10, das ferner nach dem Schritt e) und vor dem Schritt 1 aufweist:
Anzeigen einer Webseitenadresse, der einem Tastaturkürzel zugewiesen ist, das zu einer Taste der virtuellen Tastatur gehört, wenn eine Zeigevorrichtung die Taste auf der virtuellen Tastatur berührt oder eine Näherungsberührung durchführt.

12. Verfahren nach Anspruch 10, das ferner vor dem Schritt l) das Anzeigen eines Zeichens, das die berührte Taste darstellt, in dem Adresseingabefenster aufweist, und
wobei der Schritt l) aufweist:
Anzeigen einer Webseitenadresse, die einem Tastaturkürzel, das der berührten Taste zugewiesen ist, in dem Adresseingabefenster, wenn die vorgegebene Zeit bei aufrecht erhaltener Berührung vergangen ist.

## Revendications

1. Terminal conçu pour accéder à une adresse de page Web, le terminal comprenant :
un écran tactile permettant d'afficher une fenêtre d'entrée d'adresse où une adresse d'une page Web Internet accessible est écrite et un clavier virtuel ; et
un contrôleur (180), conçu pour générer une fenêtre dupliquée (S2) en réponse à la détection d'un toucher dans une zone (S1) de la fenêtre d'entrée d'adresse où ladite adresse de page Web est écrite, la fenêtre dupliquée (S2) contenant une réplique de l'adresse de page Web écrite dans la fenêtre d'entrée d'adresse, pour déplacer la fenêtre dupliquée en réponse à un mouvement de glissement après la détection du toucher quand le toucher est maintenu, pour stocker l'adresse de page Web quand une action de dépôt postérieure au mouvement de glissement se produit dans une zone de touche du clavier virtuel, et pour attribuer ladite adresse de page Web à un code de raccourci associé à une touche (K1) ayant ladite zone de touche dans le clavier virtuel, le clavier virtuel incluant le clavier QWERTY.

2. Terminal selon la revendication 1,
dans lequel le contrôleur (180) est conçu pour générer une fenêtre bulle (S7, S7') affichant une adresse de page Web attribuée à un code de raccourci associé à une touche du clavier virtuel en réponse à un toucher de proximité sur ladite touche du clavier virtuel.

3. Terminal selon la revendication 1,
dans lequel le contrôleur (180) est conçu pour afficher une adresse de page Web attribuée à un code de raccourci associé à une touche du clavier virtuel en réponse à un toucher sur ladite touche du clavier virtuel.

4. Terminal selon la revendication 1,
dans lequel le contrôleur (180) est conçu pour accéder à une adresse de page Web attribuée à un code de raccourci associé à une touche du clavier virtuel en réponse à un toucher maintenu pendant une durée prédéterminée sur ladite touche du clavier virtuel.

5. Terminal selon la revendication 1,
dans lequel le contrôleur (180) est conçu pour afficher le clavier virtuel avec une distinction entre les touches ayant un code de raccourci qui leur est associé et d'autres touches sans codes de raccourci.

6. Procédé de fonctionnement d'un terminal pour accéder à une adresse de page Web, le terminal comprenant un écran tactile permettant d'afficher une fenêtre d'entrée d'adresse où une adresse d'une page Web Internet accessible est écrite, et un clavier virtuel, le procédé comprenant les étapes consistant à :
a) détecter un toucher dans une zone (S1) de la fenêtre d'entrée d'adresse où ladite adresse de page Web est écrite ;
b) générer, en réponse à un mouvement de glissement après la détection d'un toucher quand le toucher est maintenu, une fenêtre dupliquée (S2) en réponse à ladite détection d'un toucher dans une zone de la fenêtre d'entrée d'adresse où ladite adresse de page Web est écrite, la fenêtre dupliquée (S2) contenant une réplique de l'adresse de page Web écrite dans la fenêtre d'entrée d'adresse ;
c) déplacer ladite fenêtre dupliquée (S2) en réponse au mouvement de glissement ;
d) déterminer une touche d'un clavier virtuel ayant une position dans laquelle le mouvement de glissement et de dépôt est terminé ;
e) stocker ladite adresse contenue dans la fenêtre d'entrée d'adresse et attribuer ladite adresse à un code de raccourci associé à ladite touche, le clavier virtuel incluant le clavier QWERTY.

7. Procédé selon la revendication 6, consistant en outre, après l'étape e), à :
afficher une fenêtre informant qu'une adresse de page Web est attribuée à un code de raccourci associé à la touche.

8. Procédé selon la revendication 6, consistant en outre, après l'étape e), à :
recevoir, par un dispositif de pointage, un toucher dans la zone d'une touche sur le clavier virtuel ;
afficher dans la fenêtre d'entrée d'adresse une adresse de page Web attribuée à un code de raccourci associé à la touche touchée ; et
accéder à la page Web dont l'adresse Web est affichée quand une touche d'entrée indiquant un changement de contenu est touchée.

9. Procédé selon la revendication 8, consistant en outre, après l'étape e) et avant l'étape g), à :
recevoir, par un dispositif de pointage, un toucher de proximité dans la zone d'une touche sur le clavier virtuel ; et
afficher dans la fenêtre d'entrée d'adresse une adresse de page Web attribuée à un code de raccourci associé à la touche recevant le toucher de proximité.

10. Procédé selon la revendication 6, consistant en outre, après l'étape e), à :
l) recevoir, par un dispositif de pointage, un toucher dans la zone d'une touche sur le clavier virtuel pendant une durée prédéterminée ; et
m) accéder à une page Web ayant une adresse de page Web attribuée à un code de raccourci associé à la touche touchée.

11. Procédé selon la revendication 10, consistant en outre, après l'étape e) et avant l'étape l), à :
afficher une adresse de page Web attribuée à un code de raccourci associé à une touche du clavier virtuel quand un dispositif de pointage touche ladite touche ou réalise un toucher de proximité sur ladite touche sur le clavier virtuel.

12. Procédé selon la revendication 10, consistant en outre, avant l'étape l), à :
afficher dans la fenêtre d'entrée d'adresse un caractère représentant la touche touchée,
l'étape l) consistant à :
afficher dans la fenêtre d'entrée d'adresse une adresse de page Web attribuée à un code de raccourci associé à la touche touchée quand la durée prédéterminée s'est écoulée avec le toucher maintenu.
